Europäisches Patentamt

European Patent Office

Office européen des brevets

(19)

(11) Numéro de publication: **0 090 721**
A1

(12)

# DEMANDE DE BREVET EUROPEEN

(21) Numéro de dépôt: **83400587.8**

(51) Int. Cl.³: **F 16 L 41/06,** F 16 L 47/00

(22) Date de dépôt: **22.03.83**

(30) Priorité: **22.03.82 FR 8204837**

(43) Date de publication de la demande: **05.10.83**
**Bulletin 83/40**

(84) Etats contractants désignés: **DE GB IT SE**

(71) Demandeur: **COMPAGNIE DES PRODUITS INDUSTRIELS DE L'OUEST (C.P.I.O.), Boîte Postale 1226 Zone Industrielle de Nantes Carquefou, F-44023 Nantes Cedex (FR)**

(72) Inventeur: **Sarrazin, Jean-Michel, 3, avenue des Jonquilles, F-44470 Sainte-Luce-Sur-Loire (FR)**

(74) Mandataire: **Réal, Jacques et al, Régie Nationale des Usines Renault SCE 0804, F-92109 Boulogne Billancourt Cedex (FR)**

(54) Dispositif de connexion, notamment pour la mise en place d'une purge sur un tuyau en élastomère.

(57) Le dispositif de connexion est essentiellement constitué d'un corps (1) prolongé par deux languettes (2) se terminant chacune par une oreille (3), au moins une forme en relief (9) fermée, est disposée à la face inférieure dudit corps (1), qui est par ailleurs pourvu d'un évidement central (5) fileté, recevant une vis (4) dont l'extrémité inférieure (7) s'engage à travers l'ouverture de communication avec l'intérieur du tuyau (8).

Application à la création de purges sur un tuyau en élastomère.

Dispositif de connexion, notamment pour la mise en place d'une purge sur un tuyau en élastomère.

La présente invention se rapporte à la fabrication de bracelet permettant des connexions diverses sur les tuyaux en élastomère, et plus particulièrement la réalisation de purges sur des durites pour automobiles.

Selon la pratique antérieure, le piquage permettant l'installation d'une purge est effectué à partir d'un insert noyé dans le tuyau en élastomère.

Cette opération est faite en reprise de fabrication, le tuyau en élastomère étant cuit en un premier temps sur un mandrin, puis percé, pourvu de son insert, garni d'un apport de matière supplémentaire et, au moins localement, recuit.

Le système finalement obtenu est difficile à réaliser et d'un prix de revient relativement élevé. D'autre part, des limites techniques interviennent, les piquages n'étant pas possibles sur toute la longueur du tuyau et la souplesse de réalisation du procédé ci-dessus par très grande.

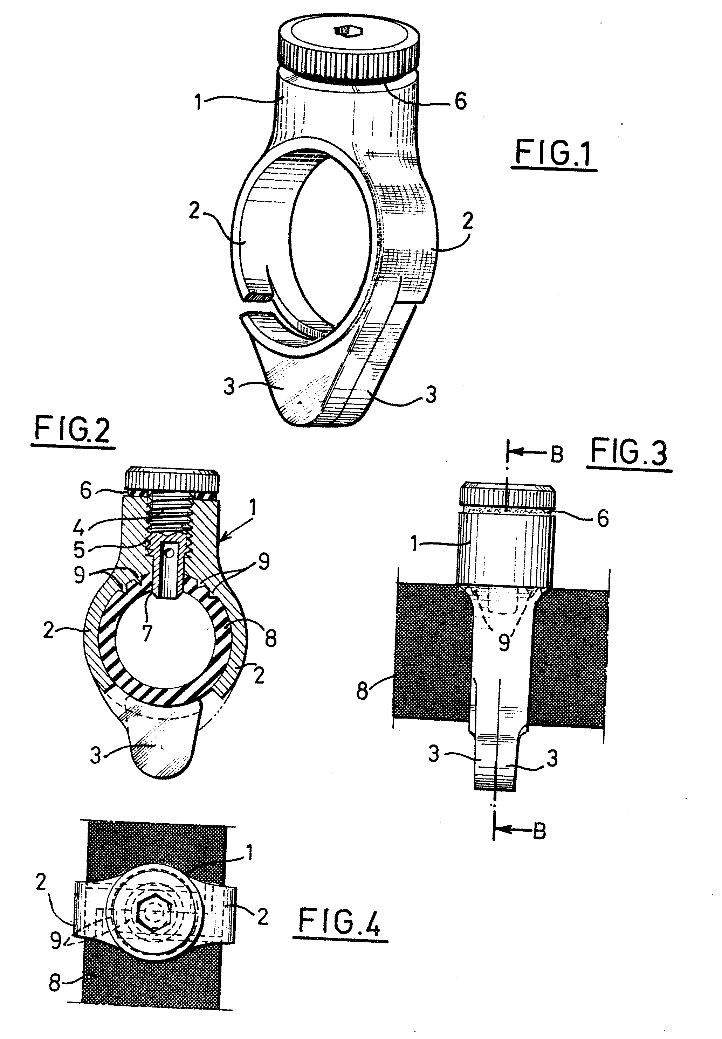

L'objet de la présente invention a pour but un système de jonction de tuyaux en élastomère, bon marché et possédant un champ d'application étendu. Il sera décrit au regard des figures 1 à 4 ci-jointes, qui représentent à titre d'exemple non limitatif respectivement :

- à la figure 1, une vue en perspective du bracelet de connexion ;

- à la figure 2, une coupe transversale de la jonction selon l'invention ;

- à la figure 3, une vue en élévation de la jonction.

- à la figure 4, une vue en plan de la même jonction.

- 2 -

Le bracelet de connexion selon l'invention est essentiellement constitué d'un corps 1, prolongé par deux languettes 2, se terminant
chacune par une oreille 3. La face inférieure du corps est pourvue
de formes 9 en relief, fermées, telles que des cercles, des ovales,
etc. Cet ensemble est obtenu très simplement par injection d'une
matière thermoplastique courante.

Le corps 1 comporte un évidement central fileté 5 destiné à recevoir
une vis 4, dans le cas de la constitution d'un système de purge. Un
joint 6 fait l'étanchéité. Par ailleurs, la vis possède une extrémité
7 dont la longueur permet son engagement à travers le tuyau 8 que
l'on veut munir du système de purge.

Ce dernier est établi de la façon suivante :

L'ensemble en matière plastique est disposé à l'emplacement destiné
à la constitution de la purge, sur le tuyau en élastomère 8. Sa solidarisation intervient avec un léger serrage, et par soudure de façon
connue en soi, telle que par utilisation des ultra-sons, au niveau
des oreilles 3.

Ces dernières pourraient également être clipsées l'une contre l'autre.

Les formes en relief fermées 9 participent au positionnement et assurent une bonne étanchéité, du fait de leur pénétration dans la couche
superficielle du tuyau en élastomère 8 sous l'action du serrage évoqué plus haut et de la pression interne régnant dans le tuyau 8 lors
de son utilisation.

Une fois le bracelet ci-dessus mis en place, un trou est percé dans
la paroi du tuyau, en utilisant l'évidement central 5 du corps 1
comme centreur pour positionner la machine de perçage.

Enfin, la vis 4 et le joint 6 sont mis en place dans l'évidement
fileté 5 du corps 1 . Au cours de cette opération, l'extrémité 7 de la vis 4 pénètre dans l'orifice correspondant du tuyau et créé une perte de charge supplémentaire entre l'intérieur du tuyau et l'évidement 5, facilitant de ce fait l'étanchéité de l'ensemble. Le desserrage de la vis 4 assure la mise à l'air libre du tuyau 8. Les pièces décrites étant de conception très simples et réalisées par injection sont donc peu coûteuses ; il en est de même pour les opérations de mises en place par soudure ou clipsage.

D'autre part, on remarquera la rapidité de l'assemblage et de la facilité du perçage du tuyau, du fait du guidage par l'évidement central 5 du corps 1. Cette opération est effectuée après la mise en place du bracelet et n'a donc pas besoin d'être localisée à priori de façon très précise.

Par ailleurs, ces manipulations ayant lieu sur un tuyau terminé, les piquages peuvent être effectués à n'importe quel endroit, et à n'importe quel moment dans la vie de la pièce. Au contraire, selon la technique antérieure, il était nécessaire de prévoir l'emplacement du perçage à l'avance, puis d'effectuer des opérations de cuisson et d'apport de matière complémentaire.

De plus, la présente invention permet la réalisation, sans inconvénient, d'un grand nombre de piquages sur un même tuyau.

On ne sortirait naturellement pas du cadre de l'invention en étendant le principe précèdemment décrit à d'autres applications, telles que par exemple la constitution d'un branchement de dérivation sur un deuxième tuyau.

0090721

REVENDICATIONS

1. Dispositif de connexion, notamment pour la mise ne place de purges sur un tuyau en élastomère, caractérisé par le fait qu'il est essentiellement constitué d'un corps (1) prolongé par deux languettes (2) se terminant chacune par une oreille (3), au moins une forme en relief (9) fermée, est disposée à la face inférieure dudit corps (1), qui est par ailleurs pourvu d'un évidement central (5) fileté, recevant une vis (4) dont l'extrémité inférieure(7)s'engage à travers l'ouverture de communication avec l'intérieur du tuyau (8).

2. Dispositif de connexion selon la revendication 1, caractérisé en ce qu'il est obtenu par injection d'un matériau thermoplastique.

3. Dispositif de connexion selon la revendication 1,caractérisé en ce qu'il est serré sur le tuyau en élastomère jusqu'à ce que les formes en relief (9) pénètrent dans sa paroi, de façon à assurer une bonne étanchéité de la connexion, les oreilles (3) étant alors rendues solidaires.

4. Dispositif de connexion selon la revendication 1, caractérisé en ce qu'il est utilisé pour effectuer une dérivation sur un deuxième tuyau.

FIG.1

FIG.2

FIG.3

FIG.4

Office europeen
des brevets

**RAPPORT DE RECHERCHE EUROPEENNE**

Numero de la demande

EP 83 40 0587

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int. Cl. ³) |
|---|---|---|---|
| Y | GB-A-1 229 175 (THE HEPWORTH IRON CY.)<br>* Page 1, lignes 9-16; figures 1-3 * | 1-4 | F 16 L 41/06<br>F 16 L 47/00 |
| Y | FR-A-2 122 114 (PLASTOTECNICA)<br>* Figures 1-3 * | 1-4 | |
| Y | FR-A-2 027 139 (EDDINS et al.)<br>* Page 7, ligne 35 - page 8, ligne 4; figure 3 * | 1-4 | |
| A | BE-A- 713 703 (PLASTIERS)<br>* Figure 1 * | 1 | |

-----

| DOMAINES TECHNIQUES RECHERCHES (Int. Cl. ³) |
|---|
| F 16 L |

Le présent rapport de recherche a été établi pour toutes les revendications

| Lieu de la recherche<br>LA HAYE | Date d'achèvement de la recherche<br>21-06-1983 | Examinateur<br>ANGIUS P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant